# EUROPÄISCHE PATENTSCHRIFT

(11) **EP 0 446 731 B1**
(45) Veröffentlichungstag und Bekanntmachung des Hinweises auf die Patenterteilung: **03.05.1995**
(21) Anmeldenummer: 91103156.5
(22) Anmeldetag: 02.03.1991
(51) Int. Cl.: C09B 41/00, C09B 29/32, C09B 29/08, C09B 29/36, C09B 29/00

(54) **Verfahren zur Herstellung von Azofarbstoffen**
Process for the manufacture of azo dyes
Procédé de fabrication de colorants azoiques

(30) Priorität: 15.03.1990 DE 4008263
(43) Veröffentlichungstag der Anmeldung: 18.09.1991
(73) Patentinhaber: BAYER AG, 51368 Leverkusen (DE)
(72) Erfinder: Raue, Roderich, Dr., W-5090 Leverkusen 1 (DE); Brack, Alfred, Dr., W-5068 Odenthal (DE); Lange, Karl-Heinrich, Dr., W-5090 Leverkusen 1 (DE)

(56) Entgegenhaltungen:
- EP-A- 0 036 116
- DE-A- 3 035 056
- PATENT ABSTRACTS OF JAPAN vol. 6, no. 177 (C-124)(1055) 11. September 1982

## Beschreibung

Die vorliegende Erfindung betrifft ein Verfahren zur Herstellung von Azofarbstoffen der allgemeinen Formel 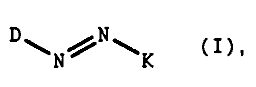
worin
- D: den Rest einer aromatischen oder heterocyclischen Diazokomponente und
- K: den Rest einer aromatischen oder heterocyclischen Kupplungskomponente bedeuten,
dadurch gekennzeichnet, daß man eine aromatische oder heterocyclische Diazokomponente der Formel

D―NH₂ (II)

und eine aromatische oder heterocyclische Kupplungskomponente der Formel

H―K (III)

mit einer salpetrige Säure abgebenden Substanz unter Einwirkung von CO₂ bei einem Druck von 5-100 at zur Reaktion bringt.

Als Reaktionsmedium eignet sich Wasser, ggf. in Mischung mit organischen Lösungsmitteln, die ganz oder teilweise mit Wasser mischbar sind.

Als geeignete Lösungsmittel kommen Methanol, Ethanol, Propanol, Isopropanol, Isoamylalkohol, Ethylenglykol, Methylglykol, Ethylglykol, Butylglykol, Ethylenglykoldimethylether, Ethylenglykoldiethylether, Diethylenglykoldimethylether, Glykoldiacetat, Methylglykolacetat, Ethylglykolacetat, Butylglykolacetat, Propylenglykol, Propylenglykolmonomethylether, Propylenglykolmonoethylether, Propylenglykoldimethylether, Propylenglykoldiethylether, Propylenglykolacetat, Triacetin, Acetonitril, Tetrahydrofuran, Dioxan, Dimethylformamid und N-Methyl-pyrrolidon in Frage.

Die Reaktion läßt sich bei 0-60°C durchführen. Die bevorzugte Reaktionstemperatur beträgt im allgemeinen 30-40°C.

Bei Normaldruck findet eine Reaktion mit CO₂ nicht statt.

Überraschenderweise wurde gefunden, daß bei Erhöhung des CO₂-Drucks auf über 5 bar die Diazotierungs- und Simultankupplungsreaktion zu Azofarbstoffen stattfindet. Der bevorzugte Druckbereich liegt bei 25-65 bar.

Geeignete salpetrige Säure abgebende Verbindungen sind beispielsweise Natriumnitrit, Kaliumnitrit, Methylnitrit, Isopropylnitrit, Amylnitrit, Glykolnitrit und der Salpetrigsäureester von Pentaerythrit oder Diethylenglykol.

Die Herstellung von Azofarbstoffen wurde bisher durch Diazotieren der aromatischen oder heterocyclischen Amine in mineralsaurer Lösung, Zugabe der Diazoniumsalzlösung zur Lösung der Kupplungskomponente und Kuppeln durch Zugabe von säurebindenden Mitteln durchgeführt. Aus der DE-AS 2 139 311 ist die Herstellung von Azofarbstoffen durch eine einstufige Diazotierung und Kupplung bekannt. Die EP 42 556 beschreibt die Herstellung kationischer Alkylarylhydrazonfarbstoffe und deren Farbbasen durch Umsetzung von aromatischen Aminen und Indolinverbindungen mit einer salpetrige Säure abgebenden Substanz in Gegenwart einer Säure. In jedem Fall wurde bisher eine anorganische oder organische Säure zur Diazotierung eingesetzt, die bei der anschließenden Kupplung neutralisiert werden muß. Hierbei entstehen anorganische Salze. Diese anorganischen Salze gelangen bei der Isolierung des Farbstoffes in das Abwasser und stellen eine Belastung dar, die in vielen Fällen nicht hingenommen werden kann. In Mischung mit dem hergestellten Farbstoff beeinflussen anorganische Salze häufig die Löslichkeit in nachteiliger Weise. Zur Herstellung stabiler Farbstofflösungen müssen diese Salze durch aufwendige Verfahren, beispielsweise Druckpermeation oder Reverseosmose entfernt werden. Alle diese Nachteile können durch das neue erfindungsgemäße Herstellungsverfahren vermieden werden.

Folgende Farbstoffgruppen können beispielsweise nach dem erfindungsgemäßen Verfahren hergestellt werden:
Farbbasen der Formel 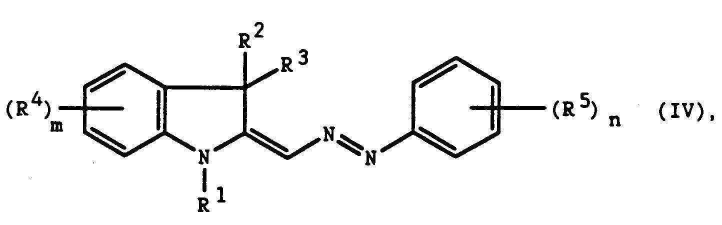
worin
- R¹: für Wasserstoff oder Alkyl mit 1-4 Kohlenstoffatomen, das durch Halogen, Hydroxy, Cyan, C₁-C₄-Alkoxy, C₁-C₄-Carbonyloxy, Phenoxy oder Phenyl substituiert sein kann,
- R² und R³: unabhängig voneinander für Methl oder Ethyl und
- R⁴ und R⁵: unabhängig voneinander für Wasserstoff, Halogen, Alkyl oder Alkoxy mit 1-4 C-Atomen, Benzyl-, Benzyloxy-, Phenyl- oder Phenoxyreste, die wiederum durch Halogen, Alkyl oder Alkoxy mit 1-4 C-Atomen substituiert sein können, Acetyl, Benzoyl oder für Carbonsäureester mit 1-4 C-Atomen oder
- R⁵: für Phenylazo oder zusammen mit dem Benzolring für ein Tetralin-, Naphthalin- oder Benzdioxanringsystem und
- m und n: unabhängig voneinander für 1 oder 2 stehen,
werden durch Umsetzung eines aromatischen Amins der Formel 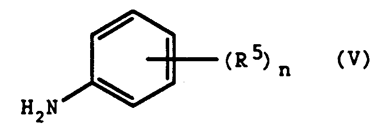
und einer Verbindung der Formeln 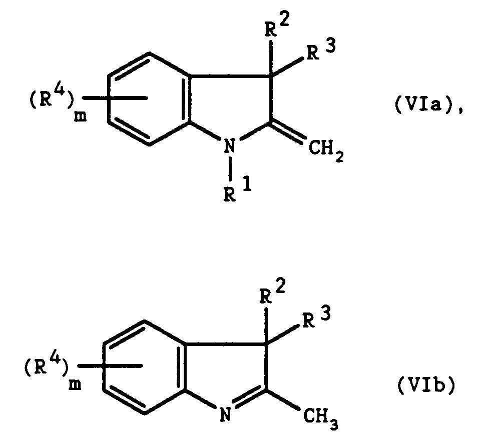
oder 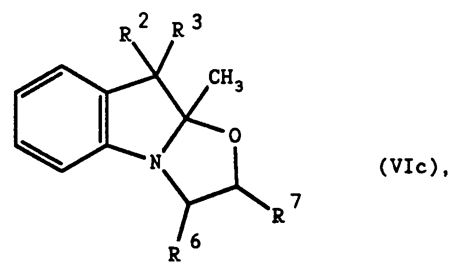
worin
- R¹ bis R⁵, m und n: die vorstehend genannte Bedeutung haben und
- R⁶ und R⁷: unabhängig voneinander für Wasserstoff, Alkyl, Alkoxy mit 1-4 C-Atomen, Phenyl oder Phenoxy stehen,
mit einer salpetrige Säure abgebenden Substanz unter Einwirkung von CO₂ bei 5-100 at hergestellt.

Farbstoffe der Formel 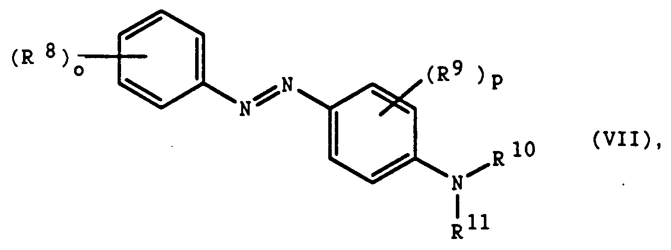
worin
- R⁸: für Wasserstoff, Halogen, Alkyl, Alkoxy mit 1-4 C-Atomen, Aminoalkyl, Dialkylaminoalkyl, Trialkylammoniumgruppen, Benzyl-, Benzyloxy-, Phenyloxyreste, Acetyl, Benzoyl, Carbonsäureester mit 1-4 C-Atomen, Carbonamid, Carboxyl, Nitro, Sulfonamid oder die Sulfonsäuregruppe
- R⁹: für Wasserstoff, Alkyl oder Alkoxy mit 1-4 C-Atomen, Acylamino mit 1-4 C-Atomen, die Hydroxyl- oder die Carboxylgruppe
- R¹⁰ und R¹¹: unabhängig voneinander für Wasserstoff oder Alkyl mit 1-4 Kohlenstoffatomen, das durch Halogen, Hydroxy, Cyan, C₁-C₄-Alkoxy, C₁-C₄-Carbonyloxy, Phenoxy oder Phenyl substituiert sein kann,
- R¹⁰: außerdem für einen Phenylrest, der wiederum durch Halogen, Alkyl oder Alkoxy mit 1-4 C-Atomen substituiert sein kann,
- R¹¹: außerdem für einen Alkylenrest, der durch Ringschluß mit dem Benzolkern einen teilhydrierten 5- oder 6-gliedrigen heterocyclischen Ring bildet,
- o: für 1 oder 2 und
- p: für 1, 2 oder 3 stehen,
werden durch Umsetzung eines aromatischen Amins der Formel 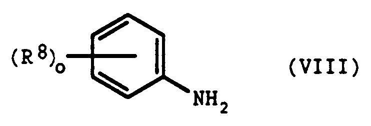
mit einem aromatischen Amin der Formel 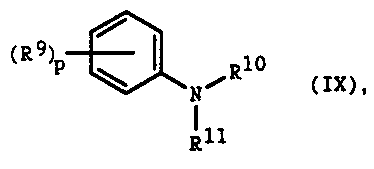
worin
- R⁸ - R¹¹ und o und p: die oben genannte Bedeutung haben,
und mit einer salpetrige Säure abgebenden Substanz in Gegenwart von CO₂ bei einem Druck von 5-100 at hergestellt.

Farbstoffe der Formel 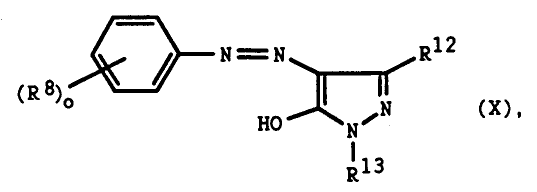
worin
- R⁸ und o: die gleiche Bedeutung wie in Formel VII haben,
- R¹²: für Methyl, Phenyl, Carbonamid oder Carbonsäurealkylester mit 1-4 C-Atomen und
- R¹³: für Wasserstoff, die Amidingruppe oder für einen ggf. durch 1-3 Halogene, Alkyl-, Alkoxy-, Carbonsäure-, Carbonamid-, Sulfonsäure- oder Sulfonamidgruppen substituierten Phenylrest stehen,
werden durch Umsetzung von aromatischen Aminen der Formel 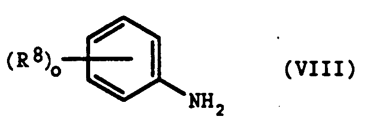
mit Pyrazolonverbindungen der Formel 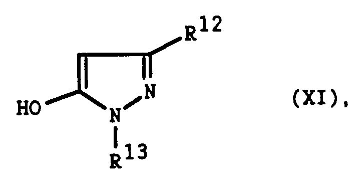
wobei
- R¹² und R¹³: die oben angegebene Bedeutung haben,
und mit einer salpetrige Säure abgebenden Substanz in Gegenwart von CO₂ bei einem Druck von 5-100 bar hergestellt.

Farbstoffe der Formel 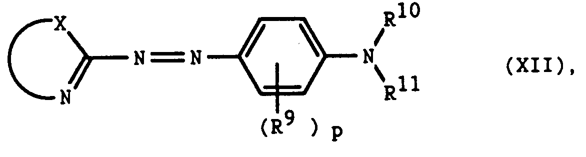
worin
- X: für die restlichen Glieder eines Thiazol-, Isothiazol-, Benzthiazol-, 1,2,4-Triazol- oder 1,3,4-Thiadiazolrestes steht und
- R⁹, R¹⁰, R¹¹ und p: die gleiche Bedeutung wie Formel VII haben,
werden durch Umsetzung von heterocyclischen Aminen der allgemeinen Formel 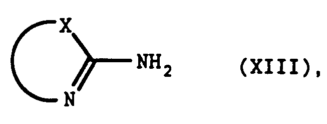
worin
- X: die gleiche Bedeutung wie in Formel XII hat,
mit aromatischen Aminen der Formel 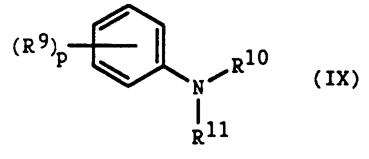
und einer salpetrige Säure abgebenden Substanz in Gegenwart von CO₂ bei einem Druck von 5-100 at hergestellt.

Farbstoffe der allgemeinen Formel 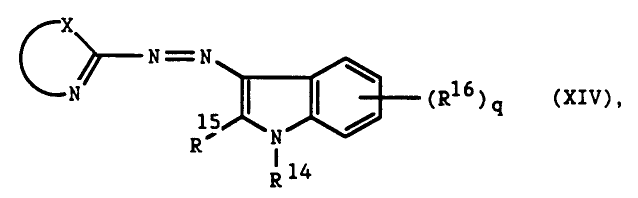
worin
- R¹⁴: für Wasserstoff, Alkyl mit 1-4 C-Atomen oder Phenyl,
- R¹⁵: für Wasserstoff, Alkyl mit 1-4 C-Atomen oder einen Phenylrest, der gegebenenfalls durch 1-3 Halogene, Alkyl- oder Alkoxyreste mit 1-4 C-Atomen substituiert sein kann, und
- R¹⁶: für Halogen, Alkyl oder Alkoxy mit 1-4 C-Atomen stehen,
- q: 0, 1 oder 2 bedeutet und
- X: die gleiche Bedeutung wie in Formel XII hat,
werden durch Umsetzung von heterocyclischen Aminen der Formel 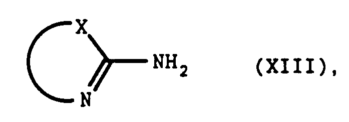
mit Indolverbindungen der Formel 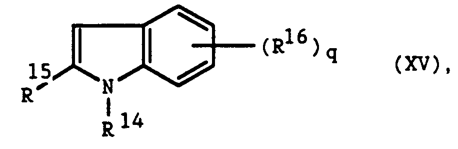
worin
- R¹⁴, R¹⁵, R¹⁶ und q: die gleiche Bedeutung wie in Formel XIV haben,
und mit einer salpetrige Säure abgebenden Substanz in Gegenwart von CO₂ bei einem Druck von 5-100 at hergestellt.

Geeignete aromatische Verbindungen der Formeln V bzw. VIII sind beispielsweise Anilin, 2-Methyl-anilin, 4-Methylanilin, 2,4-Dimethyl-anilin, 3-Methyl-anilin, 4-Chlor-anilin, 2-Chlor-anilin, 4-Anisidin, 2-Anisidin, 4-Phenetidin, 2-Phenetidin, 4-Amino-benzoesäureethylester, 4-Amino-diphenylether, 4-Aminophenyl-benzylether, 4-Amino-phenyl-4'-chlor-benzylether, 4-Amino-phenyl-4'-methoxy-benzylether, 4-Amino-azobenzol, 4-β-Hydroxyethoxy-anilin, 4-β-Methoxy-ethoxy-anilin, 4-Hydroxy-ethoxyethoxy-anilin, 4-β-Hydroxy-n-propoxy-anilin, 4-β-Hydroxy-γ-chlorpropoxy-anilin, 4-Amino-brenzcatechin-dimethylether, 4-Amino-benzdioxan, 4-Nitranilin, 2-Chlor-4-nitranilin, 2-Brom-4-nitranilin, 4-Amino-benzolsulfonsäure, 3-Amino-benzolsulfonsäure, 2-Amino-benzolsulfonsäure, 3-Chlor-4-amino-benzolsulfonsäure, 2-Amino-5-chlor-benzolsulfonsäure, 4-Amino-benzolsulfonamid, 4-Amino-benzoesäure, 3-Amino-benzoesäure, 2-Amino-benzoesäure.

Geeignete Kupplungskomponenten der Formeln VIa, b oder c sind beispielsweise 2,3,3-Trimethyl-indolenin, 2,3,3,5-Tetramethylindolenin, 2,3,3-Trimethyl-5-chlor-indolenin, 2,3,3-Trimethyl-5-methoxy-indolenin, 1,3,3-Trimethyl-2-methylen-2,3-dihydroindol, 1-Ethyl-3,3-dimethyl-2-methylen-2,3-dihydroindol, 1-Acetoxyethyl-3,3-dimethyl-2-methylen-2,3-dihydroindol, 1,3,3,5-Tetramethyl-2-methylen-2,3-dihydroindol, 1,3,3-Trimethyl-5-chlor-2-methylen-2,3-dihydroindol, 1,3,3-Trimethyl-5-methoxy-2-methylen-2,3-dihydroindol, 9,9,9a-Trimethyl-2,3,9,9a-tetrahydrooxazolo-[3,2a]-indol, 7,9,9,9a-Tetramethyl-2,3,9,9a-tetrahydrooxazolo-[3,2a]-indol, 5-Chlor-9,9,9a-trimethyl-2,3,9,9a-tetrahydrooxazolo-[3,2a]-indol.

Geeignete aromatische Amine der allgemeinen Formel IX sind beispielsweise Dimethylanilin, Diethylanilin, Dibutylanilin, N-Methyl-N-hydroxyethyl-anilin, N-Ethyl-N-hydroxyethyl-anilin, N-Butyl-N-hydroxyethyl-anilin, N-Methyl-N-acetoxethyl-anilin, N-Ethyl-N-acetoxethylanilin, N-Methyl-N-cyanethyl-anilin, N-Ethyl-N-cyanethyl-anilin, N-Methyl-N-benzylanilin, N,N-Dibenzyl-anilin, N,N-Dicyanethyl-anilin, N,N-Dihydroxyethyl-anilin, 3-Methyl-N,N-dimethyl-anilin, 3-Chlor-N,N-dimethylanilin, 3-Methyl-N,N-diethyl-anilin, 3-Chlor-N,N-diethyl-anilin, 3-Acetylamino-N,N-diethyl-anilin, 3-Ureido-N,N-diethyl-anilin, 1-Ethyl-2,2,4-trimethyl-tetrahydrochinolin, 1-Hydroxyethyl-2,2,4-trimethyl-tetrahydrochinolin, 1-Ethyl-2,2,4,7-tetramethyl-tetrahydrochinolin, 2-Methyl-2,3-dihydroindol, 2,5-Dimethyl-N,N-dimethyl-anilin, 2,5-Dimethoxy-N,N-dimethyl-anilin.

Pyrazolonverbindungen der allgemeinen Formel XI sind beispielsweise 3-Methyl-pyrazol-5-on, 1-Amidino-3-methyl-pyrazol-5-on, 1-Phenyl-3-methyl-pyrazol-5-on, 1-(2-Sulfo-phenyl)-3-methyl-pyrazol-5-on, 1-(3-Sulfo-phenyl)-3-methyl-pyrazol-5-on, 1-(4-Sulfo-phenyl)-3-methyl-pyrazol-5-on, 1-(2-Chlor-4-sulfo-phenyl)-3-methyl-pyrazol-5-on, 1-(2-Chlor-5-sulfo-phenyl)-3-methyl-pyrazol-5-on, 1-(2,5-Dichlor-4-sulfo-phenyl)-3-methyl-pyrazol-5-on, 1-(2-Chlor-phenyl)-3-methyl-pyrazol-5-on, 1-(3-Chlor-phenyl)-3-methyl-pyrazol-5-on, 1-(4-Chlor-phenyl)-3-methyl-pyrazol-5-on, 1-Phenyl-pyrazol-5-on-3-carbonsäure-ethylester.

Heterocyclische Amine der Formel XIII sind beispielsweise 2-Amino-thiazol, 3-Amino-isothiazol, 2-Amino-benzthiazol, 2-Amino-6-methoxy-benzthiazol, 3-Amino-1,2,4-triazol, 3-Amino-1,2,4-triazol-5-carbonsäure, 1-Phenyl-3,5-diamino-1,2,4-triazol, 2-Amino-1,3,4-thiadiazol, 2-Amino-5-dimethylamino-1,3,4-thiadiazol, 2-Amino-5-diethylamino-1,3,4-thiadiazol, 2-Amino-5-diisopropylamino-1,3,4-thiadiazol.

Indolverbindungen der allgemeinen Formel XV sind beispielsweise 2-Methyl-indol, 1,2-Dimethyl-indol, 1-Ethyl-2-methyl-indol, 2-Phenyl-indol, 1-Methyl-2-phenyl-indol, 1-Methyl-2-phenyl-5-chlor-indol, 1-Methyl-2-phenyl-5-methoxy-indol.

### Beispiel 1

173 g 1,3,3-Trimethyl-2-methylen-2,3-dihydroindol, 123 g p-Anisidin und eine Lösung von 73 g Natriumnitrit in 300 ml Wasser werden in einem Druckgefäß vorgelegt und CO₂ bis zu einem Druck von 50 bar eingeleitet. Die Temperatur steigt bis 35°C an und der Druck sinkt ab. Durch weiteres Einleiten von CO₂ wird ein Druck von 50 bar aufrechterhalten. Man läßt 3 h bei 35-40°C rühren und entspannt anschließend das Druckgefäß bis auf Normaldruck. Die schwach alkalisch reagierende Suspension der Farbbase wird abgesaugt, neutral gewaschen und getrocknet. Man erhält 301,2 g Farbbase der Formel: 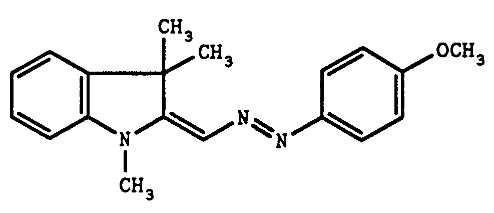
Schmelzpunkt: 147-150°C.

Die Farbbase läßt sich in bekannter Weise zu einem kationischen Farbstoff methylieren, der Polyacrylnitril mit hoher Lichtechtheit goldgelb anfärbt.

Man erhält ebenfalls Farbbasen in hoher Ausbeute, wenn man anstelle von p-Anisidin äquimolekulare Mengen von Anilin, p-Toluidin, o-Anisidin, o-Toluidin oder p-Chloranilin einsetzt.

Ebenso wertvolle Farbbasen erhält man, wenn man anstelle der dort verwendeten Kupplungskomponente 1,3,3,5-Tetramethyl-2-methylen-2,3-dihydroindol, 1,3,3-Trimethyl-5-chlor-2-methylen-2,3-dihydroindol, 1,3,3-Trimethyl-5-methoxy-2-methylen-2,3-dihydroindol oder 1,3,3-Trimethyl-5-phenoxy-2-methylen-2,3-dihydroindol einsetzt.

### Beispiel 2

In einem Druckgefäß von 1 l Fassungsvolumen werden 123 g p-Anisidin, 121 g Dimethylanilin und 73 g Natriumnitrit, gelöst in 300 ml Wasser, bei Raumtemperatur verrührt. Man schließt den Autoklaven und leitet CO₂ bis zu einem Druck von 50 bar ein. Man erwärmt das Reaktionsgemisch auf 40°C. Hierbei sinkt der CO₂-Druck ab und wird durch weiteres Einleiten von CO₂ bei 50 bar konstant gehalten. Man läßt 3 h bei 40°C rühren, kühlt das Reaktionsgefäß ab und entspannt es bis auf Normaldruck. Dann wird die Suspension des Azofarbstoffes abgesaugt, neutral gewaschen und getrocknet. Man erhält 247 g 4-Methoxy-4'-dimethylamino-azobenzol.
Der Farbstoff läßt sich im Sublimationstransferdruck verwenden.

Ebenfalls wertvolle Farbstoffe erhält man, wenn man anstelle von p-Anisidin, p-Toluidin, o-Anisidin, o-Toluidin oder Aminoresorcindimethylether einsetzt.

Gleichfalls wertvolle Farbstoffe werden mit Diethylanilin, Dibutylanilin, Methylhydroxyethylanilin oder 3-Methyl-N-ethyl-N-benzyl-anilin erhalten.

### Beispiel 3

216 g 1,3-Diamino-benzol werden in einem Druckgefäß mit einer Lösung von 90 g Natriumnitrit in 300 ml Wasser verrührt. Man leitet CO₂ bis zu einem Druck von 50 bar ein, erwärmt das Reaktionsgemisch auf 40°C und läßt es 2 h bei 40°C rühren. Nach Abkühlen entspannt man auf Normaldruck und filtriert die braune Farbstoffsuspension ab. Man erhält 239,8 g eines Farbstoffes, der aus saurer Lösung Papier in braunen Tönen färbt.

Ein ähnlich gutes Ergebnis erhält man, wenn man anstelle von 1,3-Diamino-benzol 2,4-Diamino-toluol oder ein Gemisch der beiden Amine verwendet.

### Beispiel 4

174 g 1-Phenyl-3-methyl-pyrazol-5-on, 107 g p-Toluidin und eine Lösung von 73 g Natriumnitrit in 300 ml Wasser werden im Autoklaven bei Raumtemperatur verrührt und CO₂ bis zu einem Druck von 50 bar eingeleitet. Man erwärmt das Reaktionsgefäß auf 40°C und rührt 2 h bei 40°C. Nach Abkühlen und Entspannen auf Normaldruck wird die Farbstoffsuspension abgesaugt, neutral gewaschen und getrocknet. Man erhält 197 g des Farbstoffes der Formel 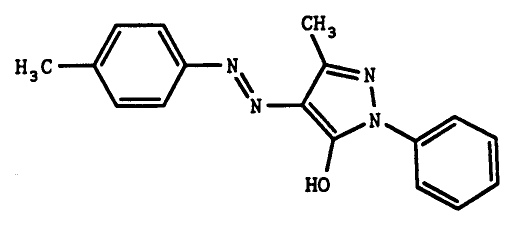
(Fp: 112-115°C), der sich zum Einfärben von Polymethylmethacrylat eignet.

### Beispiel 5

208,5 g 1-(2-Chlorphenyl)-3-methyl-pyrazol-5-on, 107 g p-Toluidin und eine Lösung von 73 g Natriumnitrit in 300 ml Wasser werden in ein Druckgefäß gebracht, CO₂ bis zu einem Druck von 50 bar eingeleitet und die Temperatur auf 40°C erhöht. Nach 2stündigem Rühren bei 40°C kühlt man das Reaktionsgefäß ab und entspannt es bis auf Normaldruck. Der Farbstoff ist zu einer harten Schmelze erstarrt. Er wird zerkleinert, mit Wasser angerührt, abgesaugt, neutral gewaschen und getrocknet. Man erhält 241,3 g des Farbstoffes der Formel 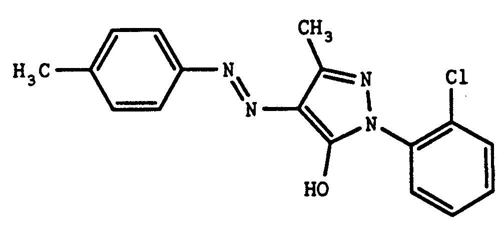
(Fp.: 89-91°C), der Polymethylmethacrylat gelb anfärbt.

### Beispiel 6

84 g 3-Amino-1,2,4-triazol, 149 g N,N-Diethylanilin und eine Lösung von 73 g Natriumnitrit in 300 ml Wasser werden in einem Autoklaven vermischt und CO₂ bis zu einem Druck von 50 bar eingeleitet. Man erwärmt das Reaktionsgemisch auf 40°C, rührt 2 h bei 40°C, läßt den Autoklaven abkühlen, entspannt ihn auf Normaldruck und saugt die Suspension der Farbbase ab. Die Farbbase wird neutral gewaschen und getrocknet. Man erhält 147,8 g der Farbbase der Formel 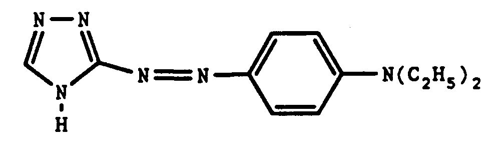
(Fp: 187-188°C).

Methyliert man die Farbbase in bekannter Weise mit Dimethylsulfat, so erhält man einen Farbstoff, der Polyacrylnitrilfasern lichtecht rot anfärbt.

Verwendet man anstelle von Diethylanilin die äquimolekulare Menge N-Ethyl-N-benzyl-m-toluidin und verfährt sonst in gleicher Weise, erhält man eine ebenfalls wertvolle Farbbase.

### Beispiel 7

149 g N,N-Diethylanilin, 70,0 g 1-Phenylguanazol, 95 g Natriumnitrit, 100 g Wasser und 200 g Methanol werden in einem Druckgefäß verrührt und CO₂ bis zu einem Druck von 65 bar eingeleitet. Man rührt zunächst 1 h bei Raumtemperatur und erwärmt dann 2 h auf 40°C. Nach Abdestillieren der Hauptmenge des Methanols erhält man ein Harz, das nach Zugabe von 20 ml konz. Salzsäure kristallisierte. Die Ausbeute beträgt 97 g eines Gemisches der Azobase mit dem Hydrochlorid. Durch Auskochen mit Ethanol wurde das Hydrochlorid abgetrennt und die zurückbleibende Farbbase aus 100 ml Dimethylformamid umkristallisiert. Man erhält 43,4 g der Farbbase der Formel 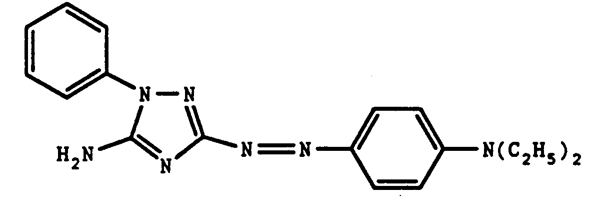
(Fp: 235-238°C).

Setzt man anstelle von Diethylanilin Dimethyl-m-toluidin als Kupplungskomponente ein, so erhält man ebenfalls eine Farbbase, die bei 281-285°C schmilzt.

### Beispiel 8

In einem Druckgefäß vermischt man unter Rühren 197 g N-Methyl-N-benzyl-anilin, 109,2 g 3-Amino-1,2,4-triazol, 94,9 g Natriumnitrit, 100 g Wasser und 200 g Methanol bei Raumtemperatur. Man leitet CO₂ bis zu einem Druck von 65 bar ein, rührt 1 h bei 25°C und 2 h bei 40°C. Während dieser Reaktion wird der Druck von 65 bar durch weiteres Einleiten von Kohlendioxid aufrechterhalten. Insgesamt werden 351 g Kohlendioxid aufgenommen. Anschließend kühlt man das Reaktionsgefäß auf Raumtemperatur ab und entspannt es bis auf Normaldruck. Die Suspension der Farbbase wird abgesaugt, neutral gewaschen und getrocknet. Ausbeute 264,2 g; Fp: 144-146°C. Die Farbbase der Formel 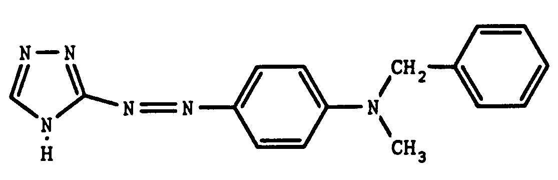
läßt sich mit Dimethylsulfat zu einem kationischen Farbstoff methylieren, der Polyacrylnitril in lichtechten roten Tönen anfärbt.

### Beispiel 9

In einem Autoklaven mit einem Fassungsvermögen von 1 000 ml werden 211 g N-Ethyl-N-benzylanilin und 109,2 g 3-Amino-1,2,4-triazol mit einer Lösung von 94,9 g Natriumnitrit in 100 g Wasser und 200 g Methanol versetzt und bei 25°C Kohlendioxid bis zu einem Druck von 65 bar eingeleitet. Man rührt 1 h bei 25°C und 2 h bei 40°C, wobei durch weiteres Einleiten von CO₂ ein Höchstdruck von 75 bar erreicht wird. Insgesamt werden 358 g CO₂ eingeleitet. Man läßt das Reaktionsgefäß abkühlen und entspannt es bis auf Normaldruck. Die Suspension der Farbbase wird abgesaugt, neutral gewaschen und getrocknet. Ausbeute: 278,4 g; Fp: 147-150°C. Der Gehalt des Rohproduktes an Farbbase der Formel 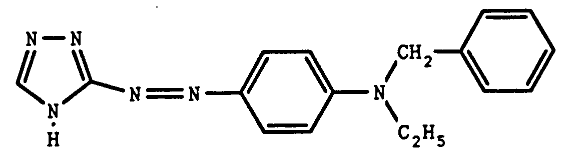
beträgt 74,5 %. Durch Methylieren dieser Farbbase erhält man einen kationischen Farbstoff, der Polyacrylnitrilfasern in lichtechten roten Farbtönen anfärbt.

### Beispiel 10

In einem Druckgefäß werden 197 g N-Methyl-N-benzylanilin, 128 g 5-Amino-1,2,4-triazol-2-carbonsäure sowie 73 g Natriumnitrit, gelöst in 300 ml Wasser, vorgelegt und bei 25°C CO₂ bis zu einem Druck von 65 bar eingeleitet. Man rührt 1 h bei 25°C und 2 h bei 40°C und hält den Druck von 65 bar durch weiteres Einleiten von CO₂ aufrecht. Insgesamt werden 230 g CO₂ aufgenommen. Nach Abkühlen des Reaktionsgefäßes wird auf Normaldruck entspannt und der gebildete Farbstoff abgesaugt, gewaschen und im Vakuum getrocknet. Man erhält 218,9 g des Farbstoffes der Formel 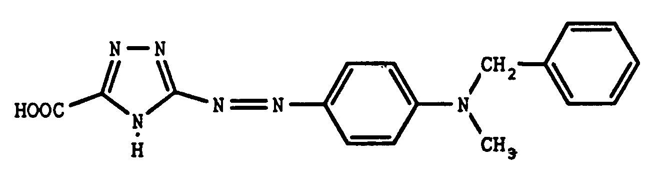
(Fp: >250°C).

### Beispiel 11

In einem Autoklaven werden 183 g N-Methyl-diphenylamin, 184,8 g 3-Amino-1,2,4-triazol und 151,8 g Natriumnitrit, gelöst in 300 ml Wasser, vorgelegt, bei 25°C CO₂ bis zu einem Druck von 50 bar eingeleitet und 6 h bei Raumtemperatur gerührt. Man entspannt das Reaktionsgefäß bis auf Normaldruck und isoliert die gebildete Farbbase der Formel 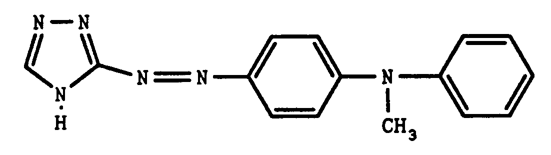
durch Absaugen, Neutralwaschen und Trocknen. Ausbeute: 213,9 g; Fp: 173-175°C.

### Beispiel 12

In einem Autoklaven werden 112,5 g N-Ethyl-N-benzyl-3-methyl-anilin und 54,6 g 3-Amino-1,2,4-triazol mit einer Lösung von 47,5 g Natriumnitrit in 50 ml Wasser und 100 ml Methanol unter Rühren vermischt und Kohlendioxid bis zu einem Druck von 60 bar eingeleitet. Dann erhöht man die Temperatur auf 40°C und läßt 5 h bei 40°C unter einem CO₂-Druck von 60 bar rühren. Anschließend kühlt man auf Raumtemperatur ab, entspannt das Druckgefäß bis auf Normaldruck, dekantiert die Lösung und zerkleinert die Schmelze der Farbbase durch Vermahlen mit Eis. Durch Absaugen, Neutralwaschen und Trocknen erhält man 157,8 g der Farbbase der Formel 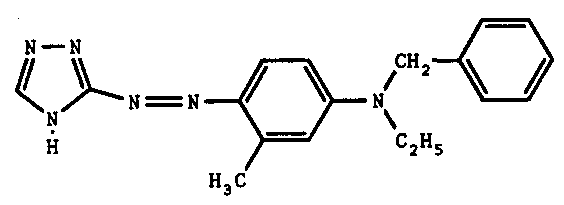
Durch Methylieren dieser Farbbase mit Dimethylsulfat erhält man einen kationischen Farbstoff, der Polyacrylnitril in lichtechten roten Farbtönen anfärbt.

### Beispiel 13

112,5 g N-Ethyl-N-benzyl-3-methyl-anilin, 54,6 g 3-Amino-triazol, 47,5 g Natriumnitrit, gelöst in 50 ml Wasser, und 300 ml Propandiol werden im Autoklaven unter Rühren vereinigt und Kohlendioxid bis zu einem Druck von 40 bar eingeleitet. Man rührt 24 h bei 30°C und entspannt das Reaktionsgefäß bis auf Normaldruck. Man erhält 571,2 g einer Lösung, in welcher die Ausgangskomponenten durch Dünnschichtchromatogramm nur noch in Spuren nachweisbar sind. Diese Lösung wird bei Raumtemperatur mit 126,1 g Dimethylsulfat versetzt und 3 h bei Raumtemperatur gerührt. Im Dünnschichtchromatogramm ist die unmethylierte Farbbase noch nachweisbar. Man versetzt mit 42 g Dimethylsulfat, rührt 21 h bei Raumtemperatur, und nach Zusatz von weiteren 21 g Dimethylsulfat und 6stündigem Rühren bei Raumtemperatur ist die Farbbase nur noch in Spuren nachweisbar. Man erwärmt nun das Reaktionsgemisch auf 70°C und hält es 1 h bei dieser Temperatur, um die Methylierung zu Ende zu führen und das überschüssige Dimethylsulfat zu zerstören. Anschließend wird die dunkelrote Lösung filtriert. Die Lösung des Farbstoffes der Formel 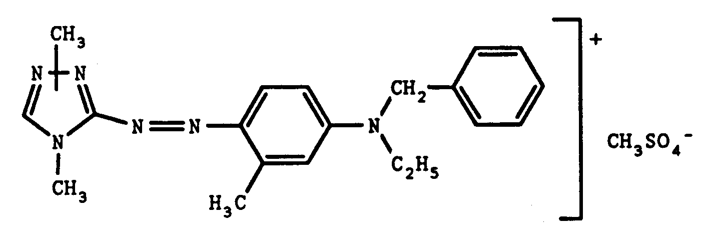
eignet sich zum Anfärben von Polyacrylnitril in lichtechten roten Farbtönen.

### Beispiel 14

225 g N-Ethyl-N-benzyl-3-methyl-anilin, 109,2 g 3-Amino-1,2,4-triazol, 94,9 g Natriumnitrit, gelöst in 100 ml Wasser, und 200 g Isopropanol werden in einem Autoklaven vereinigt und bei 25°C Kohlendioxid bis zu einem Druck von 65 bar eingeleitet. Man rührt 1 h bei 25°C und 2 h bei 40°C. Anschließend läßt man das Reaktionsgefäß abkühlen, entspannt es bis auf Normaldruck, saugt die gebildete Farbbase der in Beispiel 12 angegebenen Formel ab, wäscht sie neutral und trocknet sie im Vakuum. Ausbeute: 251,1 g.

Die gleiche Farbbase erhält man in einer Ausbeute von 218 g, wenn man anstelle von Isopropanol Isoamylalkohol als Lösungsmittel verwendet.

### Beispiel 15

18 g 2-Amino-6-methoxy-benzthiazol und 16 g N-Ethyl-N-(2-hydroxyethyl)-anilin werden zusammen mit einer Lösung von 7 g Natriumnitrit in 30 ml Wasser und 40 g Methanol in ein Druckgefäß gebracht und CO₂ bis zu einem Druck von 65 bar eingeleitet. Man läßt 21 h bei Raumtemperatur nachrühren und entspannt anschließend das Druckgefäß. Die gebildete Farbbase wird abgesaugt, neutral gewaschen und anschließend durch Waschen mit eiskaltem Methanol von Resten der Ausgangsmaterialien befreit. Man erhält 15,9 g Farbbase der Formel:

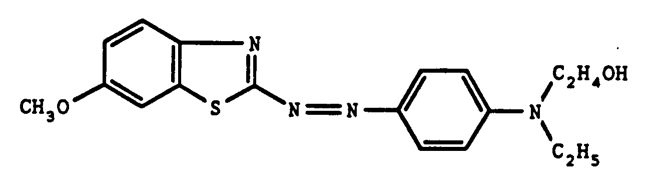

### Beispiel 16

173 g 1,3,3-Trimethyl-2-methylen-2,3-dihydroindol, 123 g p-Anisidin, 124 g Isoamylnitrit und 300 ml Wasser werden in einem Druckgefäß vorgelegt und CO₂ bis zu einem Druck von 50 bar eingeleitet. Der Autoklav wurde bis auf 40°C aufgeheizt und der Druck durch weiteres Einleiten von CO₂ bei 50 bar konstant gehalten. Man läßt 3 Stunden bei 35-40°C rühren und entspannt anschließend das Druckgefäß bis auf Normaldruck. Die Farbbase wird abgetrennt und getrocknet. Man erhält 262,0 g einer Farbbase, deren Formel in Beispiel 1 angegeben ist. Fp: 133-136°C.

### Beispiel 17

In einem Druckgefäß werden 16,8 g 3-Amino-1,2,4-triazol, 45,0 g N-Ethyl-N-benzyl-3-methylanilin, 30,4 g Amylnitrit, 80 ml Methanol und 40 ml Wasser zugegeben und CO₂ bis zu einem Druck von 53,5 bar eingeleitet. Der Autoklav wird auf 40°C erwärmt und während 3 Stunden die Temperatur von 34-40°C und durch weiteres Einleiten von CO₂ ein Druck von 50-55 bar aufrechterhalten. Danach läßt man das Reaktionsgefäß erkalten, entspannt auf Normaldruck und destilliert Methanol ab. Der Rückstand wird mit gesättigter Kochsalzlösung und etwas Salzsäure zur Kristallisation gebracht, mit Methylenchlorid weiter gereinigt und getrocknet. Man erhält 64,4 g einer Farbbase, deren Formel in Beispiel 12 angegeben ist. Fp.: 80-94°C.

### Beispiel 18

In einem Druckgefäß werden 34,5 g 2-Chlor-4-nitroanilin, 38,4 g N-Ethyl-N-dimethylaminoethylanilin, 30,4 g Amylnitrit, 80 ml Methanol und 40 ml Wasser zusammengegeben und CO₂ bis zu einem Druck von 50 bar eingeleitet. Man erwärmt das Reaktionsgemisch auf 34-40°C und läßt es 3 Stunden bei dieser Temperatur rühren. Der Druck von 50 bar wird dabei durch weiteres Einleiten von CO₂ aufrechterhalten. Anschließend läßt man das Reaktionsgemisch abkühlen und entspannt den Autoklaven bis auf Normaldruck. Man destilliert Methanol ab und trägt den Rückstand auf 1 l Wasser aus. Nach Rühren über Nacht isoliert man die Farbbase und trocknet sie. Ausbeute: 57,1 g.

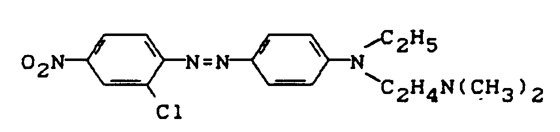

### Beispiel 19

In einem Druckgefäß werden 36,0 g 2-Amino-6-methoxybenzthiazol, 33,0 g N-Ethyl-N-2-Hydroxyethylanilin, 30,4 g Amylnitrit und 60 ml Wasser eingetragen und CO₂ bis zu einem Druck von 50 bar eingeleitet. Dann erwärmt man das Reaktionsgemisch auf 34-40°C und läßt 3 Stunden bei dieser Temperatur und einem CO₂-Druck von 50 bar rühren. Anschließend kühlt man das Reaktionsgemisch ab, entspannt es auf Normaldruck und trägt es auf 1 l Wasser aus. Der ölige Rückstand wird in Methylenchlorid aufgenommen und im Rotationsverdampfer zur Trockne eingedampft. Man erhält 44,9 g einer Farbbase, deren Formel in Beispiel 15 angegeben wurde.

### Beispiel 20

27,9 g Anthranilsäure, 34,8 g 1-Phenyl-3-methylpyrazolon-5, 31,2 g Amylnitrit, 80 ml Methanol und 40 ml Wasser werden in einem Autoklaven vermischt und CO₂ bis zu einem Druck von 50 bar eingeleitet. Anschließend erwärmt man das Reaktionsgemisch auf 34-40°C und hält den CO₂-Druck von 50 bar während der dreistündigen Reaktionszeit aufrecht. Anschließend kühlt man den Autoklaven ab und entspannt ihn bis auf Normaldruck. Das Reaktionsgemisch wird auf 1 l Wasser ausgetragen und nach Rühren über Nacht abgesaugt. Die Ausbeute des Farbstoffes der Formel 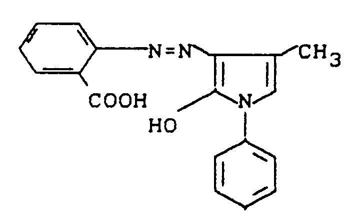
beträgt nach Trocknen 56,9 g.

### Beispiel 21

In einem Druckgefäß werden 27,9 g Anthranilsäure, 34,8 g 1-Phenyl-3-methyl-pyrazolon-5, 61,0 g Ethoxypropanol, 59 ml Wasser und 31,2 g Amylnitrit zusammengegeben und CO₂ bis zu einem Druck von 50 bar eingeleitet. Man erwärmt das Reaktionsgemisch auf 40°C und rührt 3 Stunden bei dieser Temperatur unter Konstanthalten des CO₂-Druckes von 50 bar. Nach Abkühlen entspannt man das Reaktionsgefäß bis auf Normaldruck und bringt das Reaktionsgemisch in einen Dreihalskolben. Man versetzt es mit einer 38 %igen Paste des 1:1-Chromkomplexes des Kupplungsproduktes von 4-Sulfoanthranilsäure auf Phenylmethylpyrazolon (223,0 g). Mit 550 g eines Gemisches Ethoxypropanol/Wasser 50:35 füllt man auf 1000 ml auf und stellt die Lösung mit Lithiumhydroxid auf p_{H} 7 ein. Dann erwärmt man die Lösung 2 Stunden auf 70°C und hält hierbei den p_{H}-Wert durch Zusatz von Lithiumhydroxid bei 7. Anschließend kühlt man die Lösung ab und filtriert sie. Die Lösung eignet sich zum Färben von Leder.

## Patentansprüche

1. Verfahren zur Herstellung von Azofarbstoffen der allgemeinen Formel 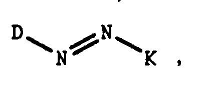 worin
D den Rest einer aromatischen oder heterocyclischen Diazokomponente und
K den Rest einer aromatischen oder heterocyclischen Kupplungskomponente bedeuten,
dadurch gekennzeichnet, daß man eine aromatische oder heterocyclische Diazokomponente der Formel
D―NH₂
und eine aromatische oder heterocyclische Kupplungskomponente der Formel
H―K
mit einer salpetrige Säure abgebenden Substanz unter Einwirkung von CO₂ bei einem Druck von 5-100 at zur Reaktion bringt.

2. Verfahren gemäß Anspruch 1, dadurch gekennzeichnet, daß man Verbindungen der allgemeinen Formel 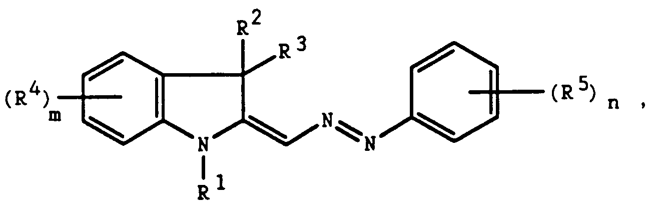 worin
R¹ für Wasserstoff oder Alkyl mit 1-4 Kohlenstoffatomen, das durch Halogen, Hydroxy, Cyan, C₁-C₄-Alkoxy, C₁-C₄-Carbonyloxy, Phenoxy oder Phenyl substituiert sein kann,
R² und R³ unabhängig voneinander für Methyl oder Ethyl und
R⁴ und R⁵ unabhängig voneinander für Wasserstoff, Halogen, Alkyl oder Alkoxy mit 1-4 C-Atomen, Benzyl-, Benzyloxy-, Phenyl- oder Phenoxyreste, die wiederum durch Halogen, Alkyl oder Alkoxy mit 1-4 C-Atomen substituiert sein können, Acetyl, Benzoyl oder für Carbonsäureester mit 1-4 C-Atomen oder
R⁵ für Phenylazo oder zusammen mit dem Benzolring für ein Tetralin-, Naphthalin- oder Benzdioxanringsystem und
m und n unabhängig voneinander für 1 oder 2 stehen,
durch Umsetzung eines aromatischen Amins der Formel 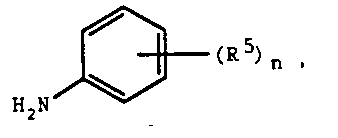 und einer Verbindung der Formeln 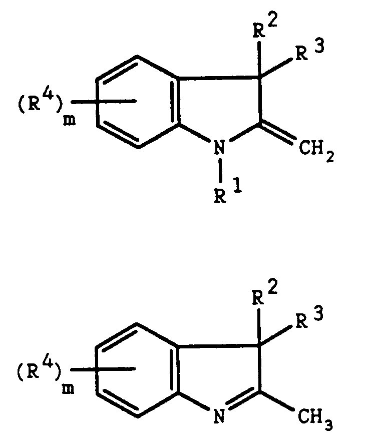 oder 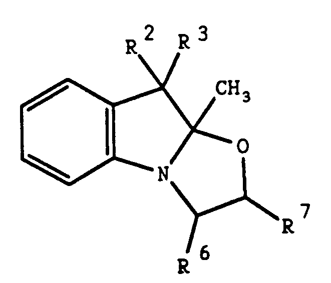 worin
R¹ bis R⁵, m und n die vorstehend genannte Bedeutung haben und
R⁶ und R⁷ unabhängig voneinander für Wasserstoff, Alkyl, Alkoxy mit 1-4 C-Atomen, Phenyl oder Phenoxy stehen,
mit einer salpetrige Säure abgebenden Substanz unter Einwirkung von CO₂ bei 5-100 at erhält.

3. Verfahren gemäß Anspruch 1, dadurch gekennzeichnet, daß man Verbindungen der allgemeinen Formel 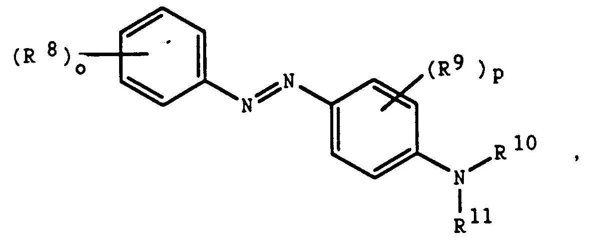 worin
R⁸ für Wasserstoff, Halogen, Alkyl, Alkoxy mit 1-4 C-Atomen, Aminoalkyl, Dialkylaminoalkyl, Trialkylammoniumgruppen, Benzyl-, Benzyloxy-, Phenyloxyreste, Acetyl, Benzoyl, Carbonsäureester mit 1-4 C-Atomen, Carbonamid, Carboxyl, Nitro, Sulfonamid oder die Sulfonsäuregruppe
R⁹ für Wasserstoff, Alkyl oder Alkoxy mit 1-4 C-Atomen, Acylamino mit 1-4 C-Atomen, die Hydroxyl- oder die Carboxylgruppe
R¹⁰ und R¹¹ unabhängig voneinander für Wasserstoff oder Alkyl mit 1-4 Kohlenstoffatomen, das durch Halogen, Hydroxy, Cyan, C₁-C₄-Alkoxy, C₁-C₄-Carbonyloxy, Phenoxy oder Phenyl substituiert sein kann,
R¹⁰ außerdem für einen Phenylrest, der wiederum durch Halogen, Alkyl oder Alkoxy mit 1-4 C-Atomen substituiert sein kann,
R¹¹ außerdem für einen Alkylenrest, der durch Ringschluß mit dem Benzolkern einen teilhydrierten 5- oder 6-gliedrigen heterocyclischen Ring bildet,
o für 1 oder 2 und
p für 1, 2 oder 3 stehen,
durch Umsetzung eines aromatischen Amins der Formel 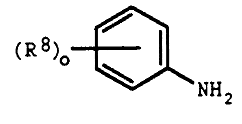 mit einem aromatischen Amin der Formel 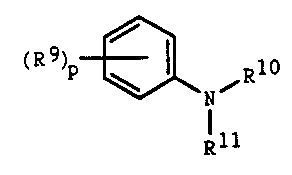 worin
R⁸ - R¹¹ und o und p die oben genannte Bedeutung haben,
und mit einer salpetrige Säure abgebenden Substanz in Gegenwart von CO₂ bei einem Druck von 5-100 at erhält.

4. Verfahren gemäß Anspruch 1, dadurch gekennzeichnet, daß man Verbindungen der allgemeinen Formel 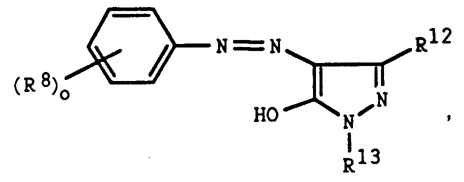 worin
R⁸ und o die in Anspruch 3 angegebene Bedeutung haben,
R¹² für Methyl, Phenyl, Carbonamid oder Carbonsäurealkylester mit 1-4 C-Atomen und
R¹³ für Wasserstoff, die Amidingruppe oder für einen ggf. durch 1-3 Halogene, Alkyl-, Alkoxy-, Carbonsäure-, Carbonamid-, Sulfonsäure- oder Sulfonamidgruppen substituierten Phenylrest stehen,
durch Umsetzung von aromatischen Aminen der Formel 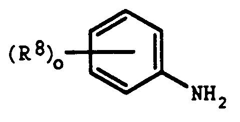 mit Pyrazolonverbindungen der Formel 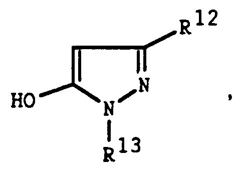 wobei
R¹² und R¹³ die oben angegebene Bedeutung haben,
und mit einer salpetrige Säure abgebenden Substanz in Gegenwart von CO₂ bei einem Druck von 5-100 bar erhält.

5. Verfahren gemäß Anspruch 1, dadurch gekennzeichnet, daß man Verbindungen der allgemeinen Formel 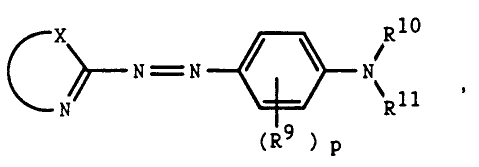 worin
X für die restlichen Glieder eines Thiazol-, Isothiazol-, Benzthiazol-, 1,2,4-Triazol- oder 1,3,4-Thiadiazolrestes steht und
R⁹, R¹⁰, R¹¹ und p die in Anspruch 3 angegebene Bedeutung haben,
durch Umsetzung von heterocyclischen Aminen der allgemeinen Formel 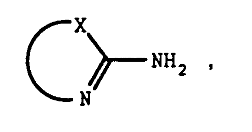 worin
X die oben angegebene Bedeutung hat,
mit aromatischen Aminen der Formel und einer salpetrige Säure abgebenden Substanz in Gegenwart von CO₂ bei einem Druck von 5-100 at erhält.

6. Verfahren gemäß Anspruch 1, dadurch gekennzeichnet, daß man Verbindungen der allgemeinen Formel 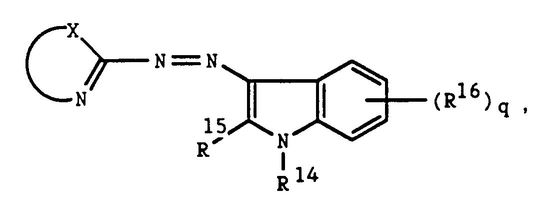 worin
R¹⁴ für Wasserstoff, Alkyl mit 1-4 C-Atomen oder Phenyl,
R¹⁵ für Wasserstoff, Alkyl mit 1-4 C-Atomen oder einen Phenylrest, der gegebenenfalls durch 1-3 Halogene, Alkyl- oder Alkoxyreste mit 1-4 C-Atomen substituiert sein kann, und
R¹⁶ für Halogen, Alkyl oder Alkoxy mit 1-4 C-Atomen stehen,
q 0, 1 oder 2 bedeutet und
X die in Anspruch 5 angegebene Bedeutung hat,
durch Umsetzung von heterocyclischen Aminen der Formel 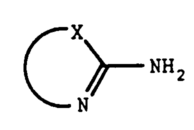 mit Indolverbindungen der Formel 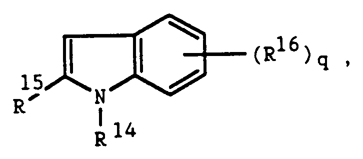 worin
R¹⁴, R¹⁵, R¹⁶ und q die oben angegebene Bedeutung haben,
und mit einer salpetrige Säure abgebenden Substanz in Gegenwart von CO₂ bei einem Druck von 5-100 at erhält.

7. Verfahren gemäß Anspruch 1, dadurch gekennzeichnet, daß die Reaktion bei 25-65 bar durchgeführt wird.

8. Verfahren gemäß Anspruch 1, dadurch gekennzeichnet, daß die Reaktion bei 30-40°C durchgeführt wird.

9. Verfahren gemäß Anspruch 1, dadurch gekennzeichnet, daß als salpetrige Säure abgebende Verbindungen Natriumnitrit, Kaliumnitrit, Methylnitrit, Isopropylnitrit, Amylnitrit, Glykolnitrit und Salpetrigsäureester von Pentaerythrit oder Diethylenglykol eingesetzt werden.

10. Verfahren gemäß Anspruch 1, dadurch gekennzeichnet, daß die Reaktion in wäßrigem Medium durchgeführt wird.

## Claims

1. Process for the preparation of azo dyestuffs of the general formula 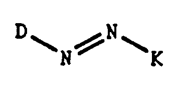 in which
D is the radical of an aromatic or heterocyclic diazo component and
K is the radical of an aromatic or heterocyclic coupling component,
characterized in that an aromatic or heterocyclic diazo component of the formula
D-NH₂
and an aromatic or heterocyclic coupling component of the formula
H-K
are reacted under the influence of CO₂ with a substance releasing nitrous acid at a pressure of 5-100 at.

2. Process according to Claim 1, characterized in that compounds of the general formula 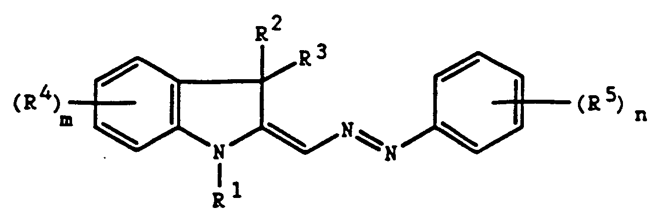 in which
R¹ represents hydrogen or alkyl having 1-4 carbon atoms which can be substituted by halogen, hydroxyl, cyano, C₁-C₄-alkoxy, C₁-C₄-carbonyloxy, phenoxy or phenyl,
R² and R³, independently of one another, represent methyl or ethyl and
R⁴ and R⁵, independently of one another, represent hydrogen, halogen, alkyl or alkoxy having 1-4 C atoms, benzyl, benzyloxy, phenyl or phenoxy radicals each of which in turn can be substituted by halogen, alkyl or alkoxy of 1-4 C atoms, acetyl, benzoyl or carboxylic esters having 1-4 C atoms or
R⁵ represents phenylazo or together with the benzene ring a tetralin, naphthalene or benzodioxane ring system and
m and n, independently of one another, represent 1 or 2,
are obtained by reacting an aromatic amine of the formula 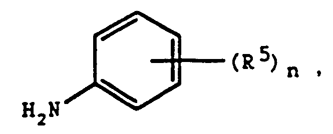 and a compound of the formulae 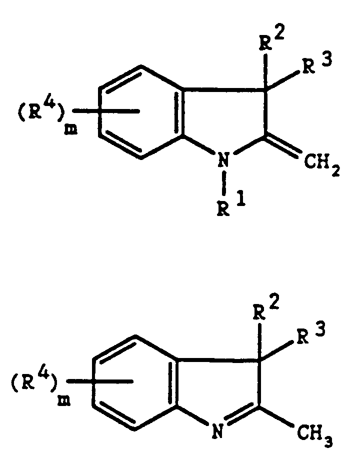 or 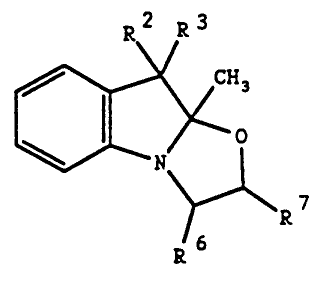 in which
R¹ to R⁵, m and n have the abovementioned meaning, and
R⁶ and R⁷, independently of one another, represent hydrogen, alkyl, alkoxy of 1-4 C atoms, phenyl or phenoxy,
under the influence of CO₂ with a substance releasing nitrous acid at 5-100 at.

3. Process according to Claim 1, characterized in that compounds of the general formula 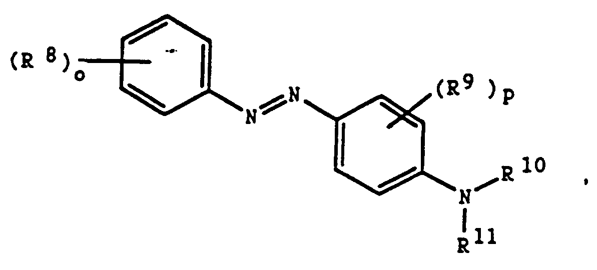 in which
R⁸ represents hydrogen, halogen, alkyl, alkoxy having 1-4 C atoms, aminoalkyl, dialkylaminoalkyl, trialkylammonium groups, benzyl, benzyloxy, phenyloxy radicals, acetyl, benzoyl, carboxylic esters having 1-4 C atoms, carboxamide, carboxyl, nitro, sulphonamide or the sulpho group
R⁹ represents hydrogen, alkyl or alkoxy having 1-4 C atoms, acylamino having 1-4 C atoms, a hydroxyl or carboxyl group,
R¹⁰ and R¹¹, independently of one another, represent hydrogen or alkyl having 1-4 carbon atoms which can be substituted by halogen, hydroxyl, cyano, C₁-C₄-alkoxy, C₁-C₄-carbonyloxy, phenoxy or phenyl,
R¹⁰ furthermore represents a phenyl radical which in turn can be substituted by halogen, alkyl or alkoxy of 1-4 C atoms,
R¹¹ furthermore represents an alkylene radical which forms a partially hydrogenated 5- or 6-membered heterocyclic ring by a ring closure with the benzene ring,
o represents 1 or 2, and
p represents 1, 2 or 3,
are obtained by reacting an aromatic amine of the formula 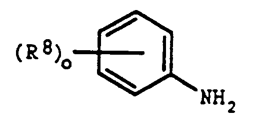 with an aromatic amine of the formula 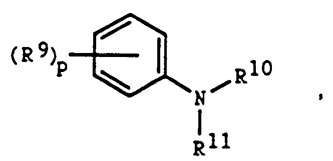 in which
R⁸- R¹¹ and o and p have the abovementioned meaning,
and with a substance releasing nitrous acid in the presence of CO₂ at a pressure of 5-100 at.

4. Process according to Claim 1, characterized in that compounds of the general formula 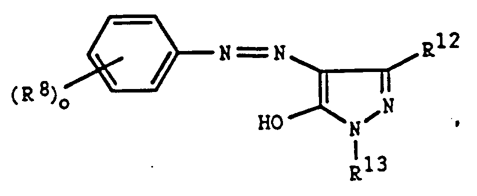 in which
R⁸ and o have the meaning given in Claim 3,
R¹² represents methyl, phenyl, carboxamide or carboxylic alkyl esters of 1-4 C atoms, and
R¹³ represents hydrogen, an amidino group or a phenyl radical which is unsubstituted or substituted by 1-3 halogens, alkyl, alkoxy, carboxyl, carboxamido, sulpho or sulphonamido groups,
are obtained by reacting aromatic amines of the formula 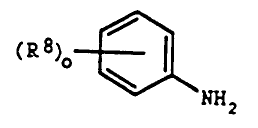 with pyrazolone compounds of the formula 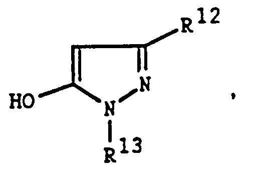 in which
R¹² and R¹³ have the abovementioned meaning,
and with a substance releasing nitrous acid in the presence of CO₂ at a pressure of 5-100 bar.

5. Process according to Claim 1, characterized in that compounds of the general formula 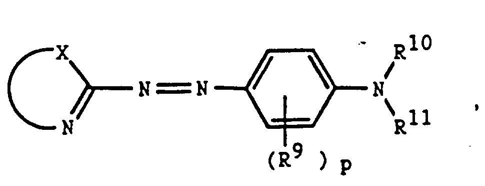 in which
X represents the remaining members of a thiazole, isothiazole, benzothiazole, 1,2,4-triazole or 1,3,4-thiadiazole radical and
R⁹, R¹⁰, R¹¹ and p have the meaning given in Claim 3,
are obtained by reacting heterocyclic amines of the general formula 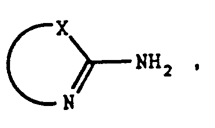 in which
X has the abovementioned meaning
with aromatic amines of the formula 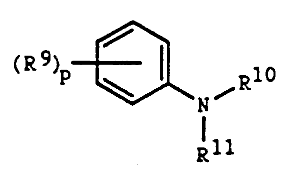 and a substance releasing nitrous acid in the presence of CO₂ at a pressure of 5-100 at.

6. Process according to Claim 1, characterized in that compounds of the general formula 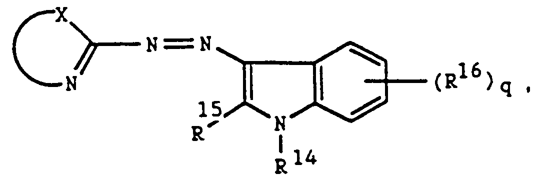 in which
R¹⁴ represents hydrogen, alkyl of 1-4 C atoms or phenyl,
R¹⁵ represents hydrogen, alkyl of 1-4 C atoms or a phenyl radical which can be unsubstituted or substituted by 1-3 halogens, alkyl or alkoxy radicals of 1-4 C atoms, and
R¹⁶ represents halogen, alkyl or alkoxy of 1-4 C atoms,
q is 0, 1 or 2, and
X has the meaning given in Claim 5,
are obtained by reacting heterocyclic amines of the formula 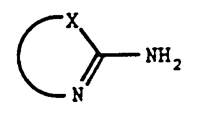 with indole compounds of the formula 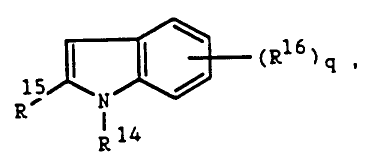 in which
R¹⁴, R¹⁵, R¹⁶ and q have the abovementioned meaning,
and with a substance releasing nitrous acid in the presence of CO₂ at a pressure of 5-100 at.

7. Process according to Claim 1, characterized in that the reaction is carried out at 25-65 bar.

8. Process according to Claim 1, characterized in that the reaction is carried out at 30-40°C.

9. Process according to Claim 1, characterized in that the compounds which are used as compounds releasing nitrous acid are sodium nitrite, potassium nitrite, methyl nitrite, isopropyl nitrite, amyl nitrite, glycol nitrite and pentaerythritol nitrite or diethylene glycol nitrite.

10. Process according to Claim 1, characterized in that the reaction is carried out in an aqueous medium.

## Revendications

1. Procédé de préparation de colorants azoïques de formule générale : 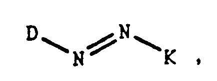 dans laquelle
D représente le radical d'un composant diazotable aromatique ou hétérocyclique et
K représente le radical d'un copulant aromatique ou hétérocyclique,
caractérisé en ce que l'on fait réagir un composant aromatique ou hétérocyclique diazotable de formule :
D―NH₂
et un copulant aromatique ou hétérocyclique de formule :
H―K
avec une substance libérant de l'acide nitreux, sous l'action de CO₂ à une pression de 5 à 100 atmosphères.

2. Procédé selon la revendication 1, caractérisé en ce que l'on obtient des composés de formule générale : 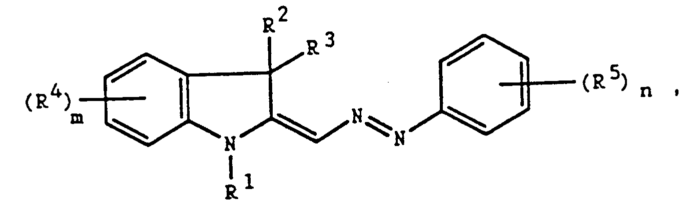 dans laquelle
R¹ représente l'hydrogène ou un groupe alkyle en C₁-C₄ qui peut être substitué par des halogènes, des groupes hydroxy, cyano, alcoxy en C₁-C₄, carbonyloxy en C₁-C₄, phénoxy ou phényle,
R² et R³ représentent chacun, indépendamment l'un de l'autre, un groupe méthyle ou éthyle et
R⁴ et R⁵ représentent chacun, indépendamment l'un de l'autre, l'hydrogène, un halogène, un groupe alkyle ou alcoxy en C₁-C₄, un groupe benzyle, benzyloxy, phényle ou phénoxy qui peuvent eux mêmes être substitués par des halogènes, des groupes alkyles ou alcoxy en C₁-C₄, un groupe acétyle, benzoyle ou ester d'acide carboxylique en C₁-C₄ ou bien
R⁵ représente un groupe phénylazo ou forme un système cyclique tétraline, naphtalène ou benzodioxanne avec le cycle benzénique et
m et n sont égaux chacun, indépendamment l'un de l'autre, à 1 ou 2,
par réaction d'une amine aromatique de formule : 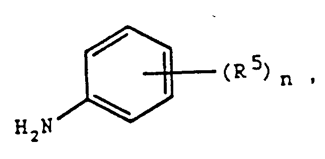 et d'un composé de formule : 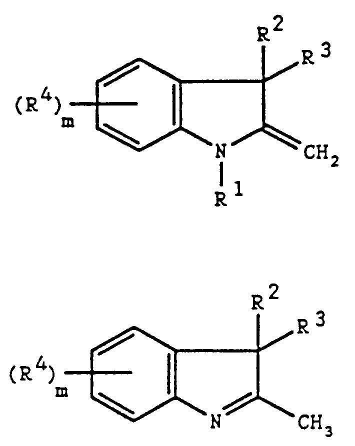 ou 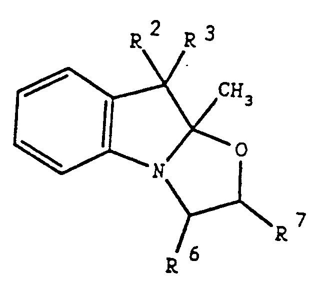 dans lesquelles
R¹ à R⁵, m et n ont les significations indiquées ci-dessus et
R⁶ et R⁷ représentent chacun, indépendamment l'un de l'autre, l'hydrogène, un groupe alkyle, alcoxy en C₁-C₄, phényle ou phénoxy,
avec une substance libérant de l'acide nitreux, sous l'action de CO₂ à une pression de 5 à 100 atmosphères.

3. Procédé selon la revendication 1, caractérisé en ce que l'on obtient des composés de formule générale: 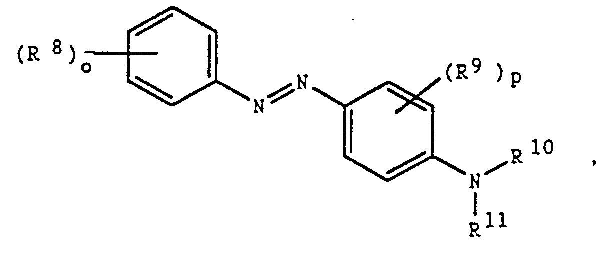 dans laquelle
R⁸ représente l'hydrogène, un halogène, un groupe alkyle, alcoxy en C₁-C₄, aminoalkyle, dialkylaminoalkyle, trialkylammonium, benzyle, benzyloxy, phényloxy, acétyle, benzoyle, ester d'acide carboxylique en C₁-C₄, carboxamide, carboxyle, nitro, sulfonamide ou acide sulfonique,
R⁹ représente l'hydrogène, un groupe alkyle ou alcoxy en C₁-C₄, acylamino en C₁-C₄, hydroxy ou carboxyle,
R¹⁰ et R¹¹ représentent, chacun indépendamment l'un de l'autre, l'hydrogène ou un groupe alkyle en C₁-C₄ qui peut être substitué par des halogènes, des groupes hydroxy, cyano, alcoxy en C₁-C₄, carbonyloxy en C₁-C₄, phénoxy ou phényle,
R¹⁰ peut en outre représenter un groupe phényle qui peut lui même être substitué par des halogènes, des groupes alkyles ou alcoxy en C₁-C₄,
R¹¹ peut en outre représenter un groupe alkylène formant par cyclisation avec le noyau benzénique un hétérocycle à 5 ou 6 chaînons partiellement hydrogéné,
o est égal à 1 ou 2 et
p est égal à 1, 2 ou 3,
par réaction d'une amine aromatique de formule : 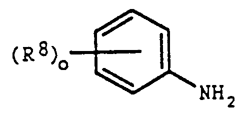 avec une amine aromatique de formule : 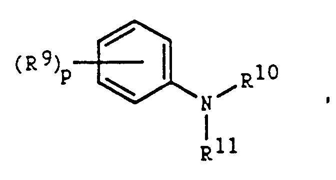 dans lesquelles
R⁸ à R¹¹ et o et p ont les significations indiquées ci-dessus,
et avec une substance libérant de l'acide nitreux en présence de CO₂ sous une pression de 5 à 100 atmosphères.

4. Procédé selon la revendication 1, caractérisé en ce que l'on obtient des composés de formule générale : 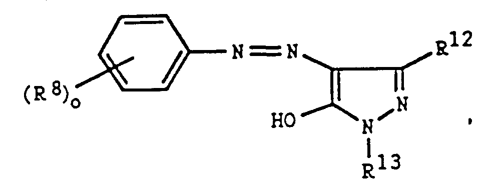 dans laquelle
R⁸ et o ont les significations indiquées dans la revendication 3,
R¹² représente un groupe méthyle, phényle, carboxamide ou carboxylate d'alkyle en C₁-C₄ et
R¹³ représente l'hydrogène, le groupe amidine ou un groupe phényle portant éventuellement 1 à 3 substituants choisis parmi les halogènes, les groupes alkyles, alcoxy, acide carboxylique, carboxamide, acide sulfonique ou sulfonamide,
par réaction d'amines aromatiques de formule : 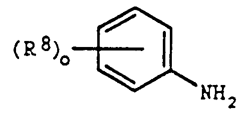 avec des dérivés de pyrazolones de formule : 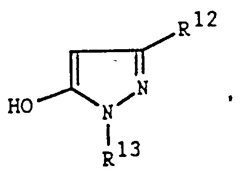 dans laquelle
R¹² et R¹³ ayant les significations indiquées ci-dessus,
et avec une substance libérant de l'acide nitreux en présence de CO₂ sous une pression de 5 à 100 bars.

5. Procédé selon la revendication 1, caractérisé en ce que l'on obtient des composés de formule générale : 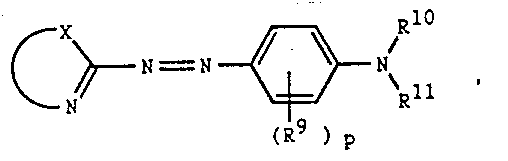 dans laquelle
X représente les chaînons restants d'un radical thiazole, isothiazole, benzothiazole, 1,2,4-triazole ou 1,3,4-thiadazole, et
R⁹, R¹⁰, R¹¹ et p ont les significations indiquées dans la revendication 3,
par réaction d'amines hétérocycliques de formule générale : 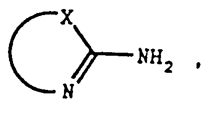 dans laquelle X a les significations indiquées ci-dessus,
avec des amines aromatiques de formule : 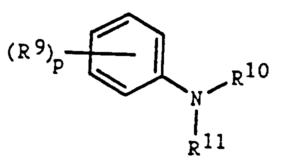 et une substance libérant de l'acide nitreux, en présence de CO₂ sous une pression de 5 à 100 atmosphères.

6. Procédé selon la revendication 1, caractérisé en ce que l'on obtient des composés de formule générale : 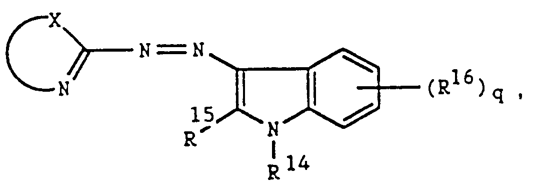 dans laquelle
R¹⁴ représente l'hydrogène, un groupe alkyle en C₁-C₄ ou phényle,
R¹⁵ représente l'hydrogène, un groupe alkyle en C₁-C₄ ou un groupe phényle qui peut le cas échéant porter 1 à 3 substituants choisis parmi les halogènes, les groupes alkyles et alcoxy en C₁-C₄, et
R¹⁶ représente un halogène, un groupe alkyle ou alcoxy en C₁-C₄,
q est égal à 0, 1 ou 2
X a la signification indiquée dans la revendication 5,
par réaction d'amines hétérocycliques de formule : 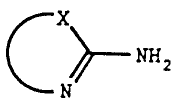 avec des dérivés de l'indole répondant à la formule : 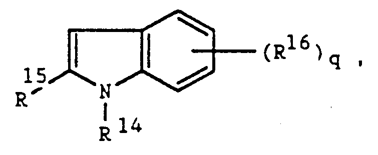 dans laquelle
R¹⁴, R¹⁵, R¹⁶ et q ont les significations indiquées ci-dessus,
et avec une substance libérant de l'acide nitreux, en présence de CO₂ sous une pression de 5 à 100 atmosphères.

7. Procédé selon la revendication 1, caractérisé en ce que la réaction est effectuée sous une pression de 25 à 65 bars.

8. Procédé selon la revendication 1, caractérisé en ce que la réaction est effectuée à une température de 30 à 40°C.

9. Procédé selon la revendication 1, caractérisé en ce que l'on utilise en tant que composés libérant de l'acide nitreux le nitrite de sodium, le nitrite de potassium, le nitrite de méthyle, le nitrite d'isopropyle, le nitrite d'amyle, le nitrite de glycol et les esters nitreux du pentaérythritol ou du diéthylèneglycol.

10. Procédé selon la revendication 1, caractérisé en ce que la réaction est effectuée en milieu aqueux.
